# EUROPEAN PATENT APPLICATION

(11) **EP 4 361 381 A1**
(43) Date of publication of application: **01.05.2024**
(21) Application number: 23205513.7
(22) Date of filing: 24.10.2023
(51) Int. Cl.: E04H 12/18, E04H 12/22, F24F 13/32

(54) **SUPPORT KIT, PARTICULARLY FOR AIR CONDITIONING EQUIPMENT**

(30) Priority: 25.10.2022 IT 202200021960
(71) Applicant: Imperiale Sagl, 6900 Lugano (CH)
(72) Inventor: INNOCENTE IMPERIALE, Alberto, CH-6900 LUGANO (CH)
(74) Representative: Vanzini, Christian

(57) **Abstract**

Support kit comprising a support base (10, 30) and a pole (20, 40) mountable to the support base (10, 30). A mounting seat (13c, 31c) is formed in the support base (10, 30) having a square cross-section and being configured to receive a lower end of the pole (20, 40). The mounting seat has a bottom surface (13d, 31d) through which a hole (13e, 31e) is formed, coaxially connected with a nut seat (13f, 31f) formed in the support base (10, 30). The pole (40) comprises a square section hollow profile interference-fittable to the mounting seat (13c, 31c) or the pole (20) comprises a telescopic structure with a lower member (21) that has a smaller cross-section than the cross-section of the mounting seat (13c, 31c) and comprises a bottom portion (21a) provided with a threaded pin (21b), through which the pole (20) is screwable to a threaded nut (15) arranged within the nut seat (13f. 31f).

## Description

The present invention is in relation to supports for equipment, in particular for air conditioning and refrigeration installations.

The ground installation of air conditioning installations brings to light the problem of vibrations during the operation of the installation: to this end the use is known of support structures that rest on the ground by means of feet, essentially a support base that rests on the ground and a pole that creates the connection between the support base and the overlying support structure of the air conditioning equipment.

Feet are known wherein the pole essentially comprises a square section hollow profile interference-fittable to a mounting seat formed in the support base. Also known are feet wherein the pole thereof comprises a telescopic structure mounted on the support base. In general, poles with a telescopic structure have a cross-section with dimensions that are less than the cross-section of the poles formed from profiles. Telescopic poles provide the possibility of height adjustment, but they are generally sized for supporting lesser loads compared to poles formed from profiles.

Similar structures to those described above may also be used in the field of ventilation installations as well as in other sectors.

One object of the present invention is to make available a solution that allows the same support base to be used with diverse types of pole.

This and other objective are achieved according to the invention with a support kit, in particular for air conditioning and refrigeration equipment, comprising
a support base configured to rest on a floor, and
a pole mountable to the support base,
wherein a mounting having a square cross-section and configured to receive a lower end of the pole is formed in the support base, said mounting seat having a bottom surface through which a hole, coaxially connected with a nut seat formed in the support base, is formed,
wherein the nut seat is configured to receive a threaded nut rotationally locked relative to the support base, and
wherein:
   - the pole comprises a square section hollow profile interference-fittable to the mounting seat, or
   - the pole comprises a telescopic structure comprising a lower member and at least one upper member slidably mounted in the lower member, wherein the lower member has a cross-section smaller than the cross-section of the mounting seat and comprises a bottom portion provided with a threaded pin, through which the pole is screwable to the threaded nut arranged in the nut seat.

According to the invention, the pole with a telescopic structure may be screwed to the support base, thereby taking advantage of the fact that its cross-section is such as to allow for rotation of the pole within the mounting seat, about the screwing axis. Whenever, on the other hand, a pole is used that is formed from a simple profile, generally having a greater cross-section, it is possible to simply engage the pole with the mounting seat, taking advantage of the interference between the outer the side surface of the pole and the inner side surface of the mounting seat.

Further features and advantages of the invention will appear from the detailed description that follows, given purely by way of non-limiting example and with reference to the accompanying drawings, wherein
Figure 1 is a perspective view of a support kit according to the invention;
Figure 2 is a sectional view of the support kit of Figure 1;
Figure 3 is a perspective view support kit insert of the support kit of Figure 1;
Figure 4 is a plan view from below of the base of the support kit of Figure 1;
Figure 5 is a perspective view of a further support kit according to the invention;
Figure 6 is a plan view from below of a base of the support kit of Figure 5; and
Figure 7 is a sectional view of the support kit of Figure 5.

Such support kit is envisaged for the ground installation of equipment (not shown), that may be, for example, air conditioning equipment. Further application examples may be in relation to refrigeration or ventilation installations and possibly also regarding other sectors.

The support kit shown in the figures from 1 to 4 comprise a support base 10 configured to rest on a floor. Such support base 10 comprises a body 11 having a substantially pyramid or pyramid frustum shape with a square plan and made of an elastomeric material. Such elastomeric material may be, at least in part, a recycled material, in particular a recycled styrene-butadiene rubber. The elastomeric material may, for example, be composed of recycled styrene-butadiene rubber granules bonded with polyurethane.

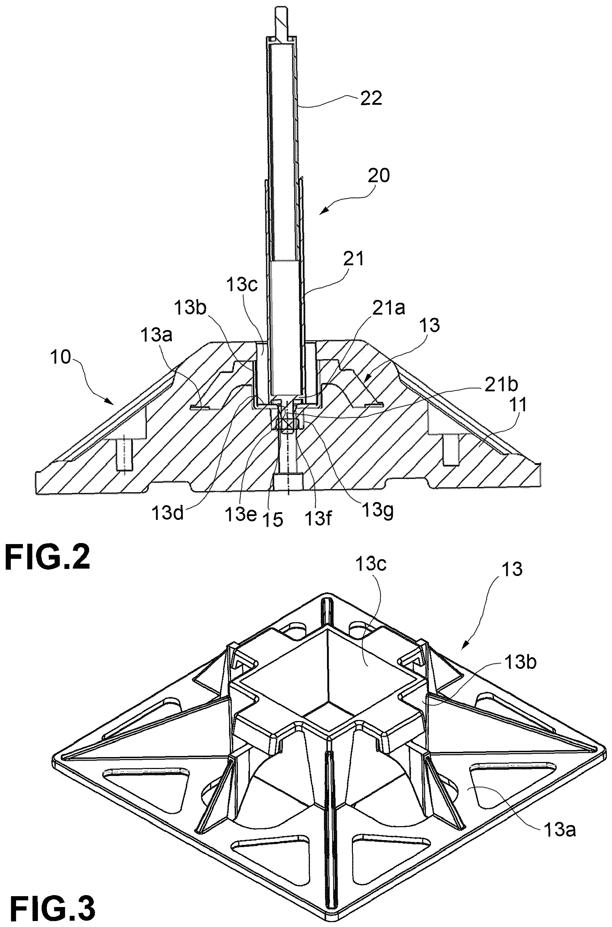

As may be observed in Figure 2, within the body 11 of elastomeric material an insert 13 of metallic or plastic material is embedded, which is shown in Figure 3. The insert 13 comprises a plate portion 13a, and a box portion 13b that extends upwards from a central area of the of the plate portion 13a. Inside the box portion 13b of the insert 13 a mounting seat 13c is formed having a square cross-section. The mounting seat 13c is laterally delimited by an inner lateral surface of the box portion 13b, and below by a bottom surface 13d of the box portion 13b.

A hole 13e is centrally formed through the bottom surface 13d, which is coaxially connected with the nut seat 13f. The nut seat 13f is formed within a collar portion 13g that extends towards the base of the bottom of the box portion 13b of the insert 13. The inner lateral surface of the collar portion 13g has a prismatic geometry that conforms to the outer lateral geometry of a threaded nut 15 inserted into the nut seat 13f. In this way the threaded nut 15 is rotationally locked relative to the support base 10.

The mounting seat 13c is configured to receive a lower end of a pole 20, that is used to create a connection between the support base 10 and a support structure (not shown) of a piece of equipment, as well as to support the weight of such piece of equipment.

In the example shown, the pole 20 comprises a telescopic structure formed from a lower member 21 and (at least) an upper member 22 slidably mounted in the lower member 21. The telescopic structure makes it possible to adjust the length of the pole 20 based upon the needs of the installation. To this end, the pole 20 comprises conventional blocking means (not shown) that are used to hold the upper member 22 at the required height in relation to the lower member 21. The lower member 21 and the upper member 22 of the telescopic structure both have square cross-sections. Different cross-sections may be used, for example circular.

The lower member 21 of the telescopic structure has a smaller cross-section than the cross-section of the mounting seat 13c. In particular, the dimensions of the cross-section of the lower member 21 have to be such as to allow for the rotation of the lower member 21 about a longitudinal axis thereof, within the mounting seat 13c.

The lower member 21 comprises a bottom portion 21a, wherefrom there extends centrally towards the base a threaded pin 21b. When the lower member 21 of the pole 20 is inserted into the mounting seat 13c, the threaded pin 21b penetrates the central hole 13e and engages with the threaded nut 15. In this way the pole 20 is screwable to the threaded nut 15 arranged in the nut seat 13f.

A further embodiment of the invention is shown in the figures from 5 to 7.

The support kit shown in the figures from 5 to 7 comprise a support base 30 configured to rest on a floor. Such support base 30 comprises a body having a substantially pyramid or pyramid frustum shape with a square plan, and made of a rigid plastic material.

The body of the support base 30 comprises a plate portion 31a, and a pyramid portion 13b that extends upwards from a central area of the plate portion 31a. A mounting seat 31c having a square cross-section is formed within the pyramid portion 31b. The mounting seat 31c is laterally delimited by an inner lateral surface of the pyramid portion 31b, and below by a bottom surface 31d of the pyramid portion 31b.

A hole 31e is centrally formed through the bottom surface 31d, which is coaxially connected with the nut seat 31f. The nut seat 31f is formed within a bottom wall 31g of the mounting seat 31c. The inner lateral surface of the nut seat 31f has a prismatic geometry that conforms to the outer lateral geometry of a threaded nut (not shown) inserted into the nut seat 31f. In this way the threaded nut is rotationally locked relative to the support base 30.

The mounting seat 31c is configured to receive a lower end of a pole 40, that is used to create a connection between the support base 30 and a support structure (not shown) of a piece of equipment, as well as to support the weight of such piece of equipment.

In the example shown, the pole 40 comprises a square cross-section hollow profile.

The pole 40 has a cross-section that is substantially equal to the cross-section of the mounting seat 31c. In this way, the pole 40 may be interference inserted into the mounting seat 31c.

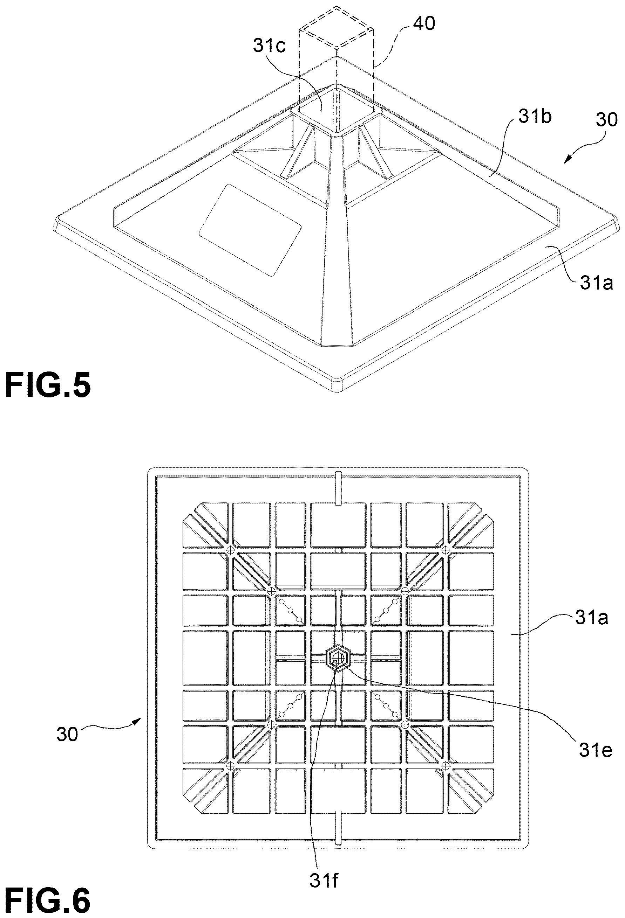

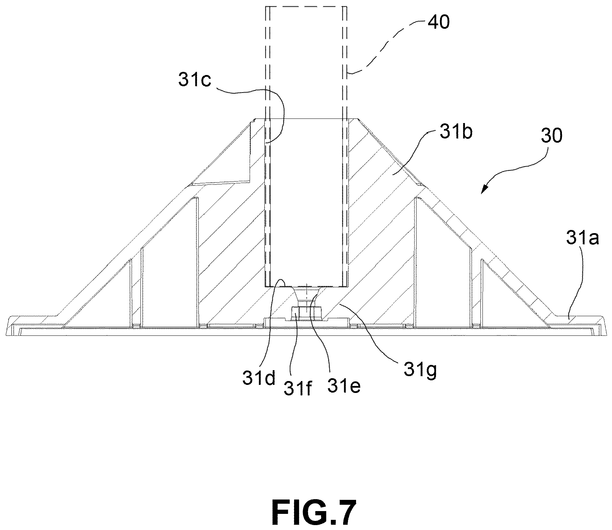

When, instead of the pole 40 formed from a profile a pole 20 is used with a telescopic structure as described in relation to the previous embodiment, such pole 20 with a telescopic structure may be screwed to the mounting base 30 of Figures 5-7, taking advantage of the same procedure described in relation the previous embodiment.

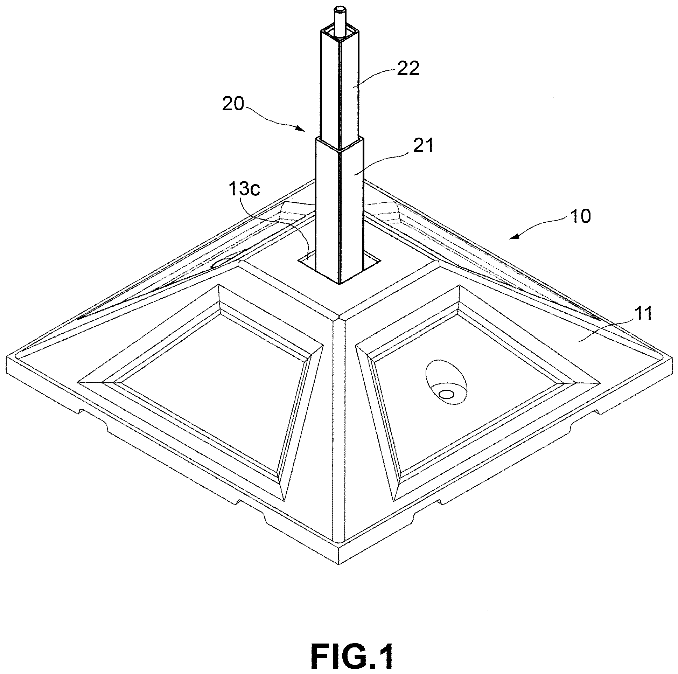

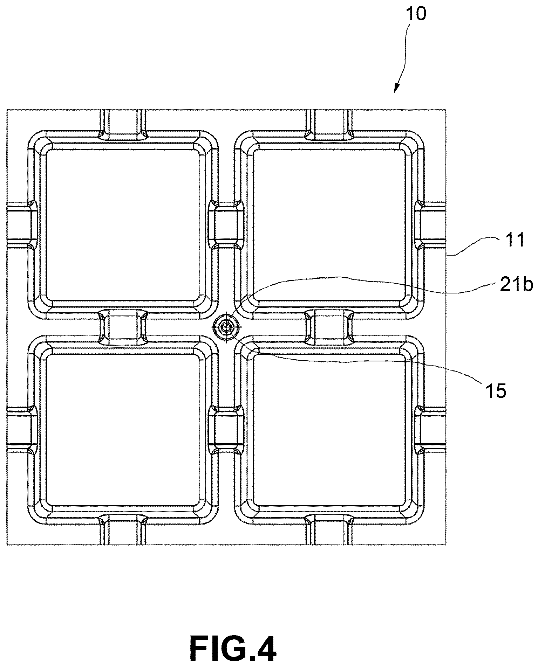

In a comparable way, if the pole 40 formed from a profile is used in the support base 10 of Figures 1-4, such pole 40 may be interference inserted in the mounting seat 13c of such support base 10 in the same way as that described in relation to the embodiment of Figures 5-7.

Therefore, both of the support bases described above may indifferently be used using poles with a telescopic structure of using one-piece body poles formed from square section hollow profiles.

## Claims

1. Support kit particularly for air conditioning and refrigeration equipment, comprising
a support base (10, 30) configured to rest on a floor, and
a pole (20, 40) mountable to the support base (10, 30),
wherein a mounting seat (13c, 31c) having a square cross-section and configured to receive a lower end of the pole (20, 40) is formed in the support base (10, 30), said mounting seat having a bottom surface (13d, 31d) through which a hole (13e, 31e), coaxially connected with a nut seat (13f, 31f) formed in the support base (10, 30), is formed,
wherein the nut seat (13f, 31f) is configured to receive a threaded nut (15) rotationally locked relative to the support base (10, 30), and
wherein:
- the pole (40) comprises a square section hollow profile interference-fittable to the mounting seat (13c, 31c), or
- the pole (20) comprises a telescopic structure comprising a lower member (21) and at least one upper member (22) slidably mounted in the lower member (21), wherein the lower member (21) has a cross-section smaller than the cross-section of the mounting seat (13c, 31c) and comprises a bottom portion (21a) provided with a threaded pin (21b), through which the pole (20) is screwable to the threaded nut (15) arranged in the nut seat (13f, 31f).

2. Support kit according to claim 1, wherein said lower member (21) and at least one upper member (22) of the telescopic structure have a square cross-section.

3. Support kit according to claim 1 or 2, wherein the support base (10, 30) is substantially pyramid- or pyramid frustum-shaped with a square base.

4. Support kit according to any of the preceding claims, wherein the support base (10) comprises a body (11) of elastomeric material within which an insert (13) of metallic or plastic material is embedded, wherein the mounting seat (13c) and the nut seat (13f) are formed in the insert (13).

5. Support kit according to claim 4, wherein said elastomeric material is at least in part a recycled material, in particular a recycled styrene-butadiene rubber.

6. Support kit according to any of the claims from 1 to 3, wherein the support base (30) comprises a one-piece body of rigid plastic material.
